# EUROPEAN PATENT APPLICATION

(11) **EP 4 636 156 A1**
(43) Date of publication of application: **22.10.2025**
(21) Application number: 23903032.3
(22) Date of filing: 25.08.2023
(51) Int. Cl.: D07B 1/16, B60C 1/00, B60C 9/00, D07B 1/06

(54) **METAL CORD-CROSSLINKED RUBBER COMPOSITE AND TIRE**

(30) Priority: 14.12.2022 JP 2022199840
(71) Applicant: BRIDGESTONE CORPORATION, Chuo-ku Tokyo 104-8340 (JP)
(72) Inventor: ONO, Yamato, Tokyo 104-8340 (JP); MIYAZAKI, Yoshinori, Tokyo 104-8340 (JP); OSHIDA, Mariko, Tokyo 104-8340 (JP)
(74) Representative: Marks & Clerk LLP
(86) International application number: PCT/JP2023/030798
(87) International publication number: WO 2024/127728

(57) **Abstract**

A metal cord-crosslinked rubber composite with excellent initial adhesiveness and heat-resistant adhesiveness between a crosslinked rubber and a metal cord is provided. A metal cord-crosslinked rubber composite includes a metal cord and a crosslinked rubber that coats the metal cord. The surface of the metal cord has an N atom ratio of 2 atomic% or more and 60 atomic% or less and a Cu/Zn ratio of 1 or more and 4 or less. The crosslinked rubber is a crosslinked rubber of a rubber composition containing a rubber component including natural rubber. The fatty acid content in the natural rubber is 1.60 mass% or less. The content of a cobalt-containing compound in the rubber composition is 1 part by mass or less per 100 parts by mass of the rubber component.

## Description

### TECHNICAL FIELD

The present disclosure relates to a metal cord-crosslinked rubber composite and a tire.

### BACKGROUND

Conventionally, metal cord-rubber composites in which a rubber composition is coated on a metal cord, such as a steel cord, have been used in rubber articles that require strength, such as automobile tires, industrial belts, and rubber crawlers for the purpose of reinforcing the rubber to improve strength and durability. Here, it is necessary to bond the metal cords to the rubber composition stably and firmly to cause a resulting metal cord-rubber composite to exhibit a high reinforcing effect, in this regard.

For example, in a pneumatic tire, which is a typical example of a rubber article, a rubber composite formed by coating, with a rubber, a steel cord formed by twisting together a plurality of steel wires or a steel cord composed of a single steel wire having brass plating applied thereon is applied to the belt or carcass to thereby achieve reinforcement primarily by the steel cord. In order to utilize the steel cord as a reinforcing material for the tire, it is necessary to securely adhere the steel cord to the coating rubber, and for this purpose, brass (brass made of Cu and Zn) plating is applied to the circumferential surface of the wire forming the steel cord.

In other words, a so-called direct vulcanization adhesion is widely used in which a metal cord such as a steel cord having brass plating applied thereon is coated with a rubber composition containing sulfur, which is adhered simultaneously with the vulcanization of the rubber composition (adhesion is achieved by forming a rubber-metal adhesion layer (CuxS) or the like). Up until now, various studies and research has been conducted to improve the adhesion between the metal cord and the rubber in this direct vulcanization adhesion.

For example, in order to vulcanize and mold a tire within a certain period of time, it is required to ensure the adhesion speed and complete bonding between the cord and the rubber to provide sufficient adhesive strength, in other words, so-called initial adhesiveness is required. This requires adding cobalt-containing compounds such as Co salts, nickel-containing compounds such as Ni salts, as adhesion promoters, to the rubber at a considerable proportion, or blending sulfur at a high ratio, or the like.

However, when cobalt-containing compounds such as Co salts are blended into the rubber, physical properties, such as degradation of rubber and crack growth resistance, are significantly affected compared to rubber not containing Co. Therefore, various proposals have been made not only on the adjustment of the composition of the rubber composition, but also on the metal cord, such as a wire, that is adhered to the rubber.

For example, PTL 1 discloses a code-rubber composite composed of a steel cord and a coating rubber coating the steel cord, wherein the steel cord is composed of a heat-treated cord using a steel wire subjected to a heat treatment at a heating temperature of 400 to 800 °C and a heating time of 30 to 250 seconds after plating, and the coating rubber is composed of a rubber composition containing 0.3 to 1.0% of water in an unvulcanized state.

Furthermore, for example, PTL 2 discloses a rubber-steel cord composite composed of a rubber composition in which an organic acid metal salt component composed of at least one organic acid metal salt and having a molar ratio of metal contents of nickel to molybdenum of 2/1 to 20/1 is blended in an amount of 0.01 to 10 parts by weight in terms of metal content per 100 parts by weight of the rubber component, and a steel cord having applied thereon brass plating with a copper content of 60 to 70% by weight.

### CITATION LIST

### Patent Literature

PTL 1: JP 2004-306788 A
PTL 2: JP 2005-193793 A

### SUMMARY

### (Technical Problem)

However, the composites disclosed in PTL 1 and PTL 2 have problems such as reduced physical properties of rubber, e.g., degradation of rubber and crack growth resistance, due to the increase in physical and thermal loads applied to rubber articles that particularly require strength in recent years, such as tires and industrial belts.

In view of the aforementioned circumstances, the present disclosure is directed to providing a metal cord-crosslinked rubber composite with excellent initial adhesiveness and heat-resistant adhesiveness between a crosslinked rubber and a metal cord.

The present disclosure is also directed to providing a tire having excellent durability which includes the above-described metal cord-crosslinked rubber composite.

### (Solution to Problem)

<1> A metal cord-crosslinked rubber composite comprising a metal cord and a crosslinked rubber that coats the metal cord,
   wherein a surface of the metal cord has an N atom ratio of 2 atomic% or more and 60 atomic% or less and a Cu/Zn ratio of 1 or more and 4 or less,
   the crosslinked rubber is a crosslinked rubber of a rubber composition containing a rubber component including natural rubber,
   a fatty acid content in the natural rubber is 1.60 mass% or less, and
   a content of a cobalt-containing compound in the rubber composition is 1 part by mass or less per 100 parts by mass of the rubber component.
<2> The metal cord-crosslinked rubber composite according to <1>, wherein the metal cord is a metal cord comprising a single metal wire or a plurality of wires twisted together having brass plating applied to a circumferential surface thereof, and a composition of the brass plating comprises 40 to 80 mass% of Cu and 20 to 60 mass% of Zn.
<3> The metal cord-crosslinked rubber composite according to <1> or <2>, wherein the metal cord is a metal cord subjected to a surface treatment with a buffer solution having a pH of 5.0 to 7.2 and a treatment with one or more triazole compounds selected from 1,2,4-triazole, 1,2,3-triazole, 3-amino-1,2,4-triazole, 4-amino-1,2,4-triazole, benzotriazole, tolyltriazole, and 3-mercapto-1,2,4-triazole.
<4> The metal cord-crosslinked rubber composite according to any one of <1> to <3>, wherein a content of cobalt fatty acid salts as the cobalt-containing compound in the rubber composition is 0 part by mass per 100 parts by mass of the rubber component.
<5> The metal cord-crosslinked rubber composite according to <4>, wherein the content of the cobalt-containing compound in the rubber composition is 0 part by mass per 100 parts by mass of the rubber component.
<6> The metal cord-crosslinked rubber composite according to any one of <1> to <5>, wherein a proportion of the natural rubber in the rubber component is 60 mass% or more.
<7> A tire comprising the metal cord-crosslinked rubber composite according to any one of <1> to <6>.

### (Advantageous Effect)

According to the present disclosure, it is possible to provide a metal cord-crosslinked rubber composite with excellent initial adhesiveness and heat-resistant adhesiveness between a crosslinked rubber and a metal cord.

Furthermore, according to the present disclosure, it is possible to provide a tire having excellent durability which includes the above-described metal cord-crosslinked rubber composite.

### DETAILED DESCRIPTION

Hereinafter, the present disclosure will be illustrated and explained in detail based on an embodiment thereof. In the following description, the description of a numerical range as "A to B" indicates a numerical range including the endpoints A and B, and represents "A or more and B or less" (when A < B) or "A or less and B or more" (when A > B).

Also, parts by mass and mass% are synonymous with parts by weight and weight%, respectively.

### <Metal Cord-Crosslinked Rubber Composite>

A metal cord-crosslinked rubber composite of the present disclosure comprises a metal cord and a crosslinked rubber that coats the metal cord.

Here, the surface of the metal cord has an N atom ratio of 2 atomic% or more and 60 atomic% or less and a Cu/Zn ratio of 1 or more and 4 or less.

Furthermore, the crosslinked rubber is a crosslinked rubber of a rubber composition containing a rubber component including natural rubber, in which the fatty acid content in the natural rubber is 1.60 mass% or less, and the content of a cobalt-containing compound in the rubber composition is 1 part by mass or less per 100 parts by mass of the rubber component.

The crosslinked rubber may also be referred to as "the crosslinked rubber of the present disclosure."

The rubber composition serving as the base of the crosslinked rubber of the present disclosure may be referred to as "the rubber composition of the present disclosure." It should be noted that the rubber composition is uncrosslinked, and the rubber component contained in the rubber composition is also uncrosslinked.

The metal cord-crosslinked rubber composite in which the crosslinked rubber having the above-described configuration covers the metal cord having the above-described configuration is referred to as the metal cord-crosslinked rubber composite of the present disclosure.

Although the reason why the metal cord-crosslinked rubber composite of the present disclosure is with excellent initial adhesiveness and heat-resistant adhesiveness between the crosslinked rubber and the metal cord is not clear, it has been discovered that using the crosslinked rubber of the rubber composition of the present disclosure having the above-described configuration as the coating rubber for the metal cord in which the surface N atom ratio is 2 atomic% or more and 60 atomic% or less and the Cu/Zn ratio is 1 or more and 4 or less can achieve such effects.

Hereinafter, the rubber composition and metal cord of the present disclosure, and the production of the metal cord-crosslinked rubber composite of the present disclosure will be described.

### [Rubber Composition]

The rubber composition of the present disclosure contains a rubber component including natural rubber, in which the fatty acid content in the natural rubber is 1.60 mass% or less, and the content of a cobalt-containing compound in the rubber composition is 1 part by mass or less per 100 parts by mass of the rubber component.

The rubber composition of the present disclosure may further contain a filler, a crosslinking agent, a vulcanization accelerator, zinc oxide, and the like.

### (Rubber Component)

The rubber component includes natural rubber having a fatty acid content of 1.60 mass% or less.

The natural rubber contains fatty acids such as stearic acid as non-rubber components, but if the fatty acid content in the natural rubber is more than 1.60 mass%, it is not possible to achieve excellent initial adhesiveness and heat-resistant adhesiveness between the crosslinked rubber and the metal cord.

The fatty acid content in the natural rubber refers to the total content of all fatty acids contained in the natural rubber. The fatty acids contained in the natural rubber may be saturated fatty acids or may be unsaturated fatty acids, and the fatty acids contained in the natural rubber include one or more selected from the group consisting of stearic acid, palmitic acid, oleic acid, and linoleic acid.

The fatty acid content in the natural rubber is preferably 1.45 mass% or less, more preferably 1.30 mass% or less, and even more preferably 1.20 mass% or less.

The fatty acid content in the natural rubber may be 0 mass%, but from the perspective of promoting the crosslinking reaction, the fatty acid content is preferably 0.3 mass% or more, more preferably 0.6 mass% or more, and even more preferably 0.80 mass% or more.

The fatty acid content in the natural rubber can be measured by a titration method. The reagents used for measurements by the titration method are not particularly limited and commercially available alkaline reagents and commercially available indicators can be used. The apparatus and measurement conditions used in the titration method are not particularly limited and may be appropriately selected by those skilled in the art using commercially available apparatus.

Natural rubber having a fatty acid content of 1.60 mass% or less and natural rubber having a fatty acid content more than 1.60 mass% that can be used may be commercially available products having the prescribed fatty acid content. Furthermore, the fatty acid content in the natural rubber can be reduced by washing natural rubber to thereby obtain natural rubber having a desired fatty acid content.

Furthermore, the natural rubber may be modified natural rubber. When the natural rubber is modified, it is preferably a modified natural rubber having a nitrogen content of 0.1 to 0.3 mass%, for example. It is also preferable that the modified natural rubber is one from which protein has been removed by a centrifugation process, an enzyme treatment, or a urea treatment. Furthermore, it is preferable that the phosphorus content in the modified natural rubber is more than 200 ppm and 900 ppm or less.

The rubber component is not particularly limited except that natural rubber having a fatty acid content of 1.60 mass% or less is used. The rubber component may further contain, as another rubber component, for example, synthetic diene-based rubber.

Examples of the synthetic diene-based rubber include, for example, synthetic isoprene rubber (IR), polybutadiene rubber (BR), styrene-butadiene copolymer rubber (SBR), butadiene-isoprene rubber (BIR), styrene-isoprene rubber (SIR), styrene-butadiene-isoprene rubber (SBIR), isobutylene-isoprene rubber (IIR), and modified rubbers of these.

The rubber component may also contain non-diene rubber as another rubber component, as long as the effects of the present disclosure are not impaired.

From the perspective of adhesion between the metal cord and the crosslinked rubber, and durability of the metal cord-crosslinked rubber composite, the rubber component preferably contains at least one selected from the group consisting of synthetic isoprene rubber, styrene-butadiene copolymer rubber, and butadiene rubber, and more preferably contains synthetic isoprene rubber, as another rubber component.

The rubber component may consist solely of natural rubber having a fatty acid content of 1.60 mass% or less, or may be a mixture with one or two or more other rubber components.

Only one type of natural rubber having a fatty acid content of 1.60 mass% or less, or two or more types of these may be used.

From the perspective of initial adhesiveness and heat-resistant adhesiveness between the metal cord and the crosslinked rubber, and durability of the crosslinked rubber, the proportion of natural rubber having a fatty acid content of 1.60 mass% or less in the rubber component is preferably 60 mass% or more, more preferably 65 mass% or more, and even more preferably 70 mass% or more.

Furthermore, the rubber component may include synthetic isoprene rubber from the perspective of workability, but in this case, the proportion of synthetic isoprene rubber in the rubber component is preferably 20 mass% or less.

### (Cobalt-Containing Compound)

The content of a cobalt-containing compound in the rubber composition of the present disclosure is 1 part by mass or less per 100 parts by mass of the rubber component. This means that the rubber composition of the present disclosure substantially does not contain a cobalt-containing compound. This is for the purpose of reducing the environmental burden and complying with various regulations.

From a similar perspective, the content of the cobalt-containing compound (particularly a cobalt fatty acid salt) in the rubber composition is preferably 0 part by mass per 100 parts by mass of the rubber component, in other words, it is preferable that the rubber composition does not contain a cobalt-containing compound (is cobalt-free).

Examples of the cobalt-containing compound include cobalt fatty acid salts and cobalt metal complexes.

Examples of the cobalt fatty acid salts include cobalt naphthenate, cobalt stearate, cobalt neodecanoate, cobalt rosinate, cobalt versatate, cobalt tallate, cobalt oleiate, cobalt linoleate, cobalt linolenate, and cobalt palmitate, for example. Examples of the cobalt metal complex include cobalt acetylacetonate.

### (Fatty Acid)

The rubber composition of the present disclosure may contain a fatty acid.

Note that the fatty acid blended in the preparation of the rubber composition is referred to as "blended fatty acid" in order to distinguish it from the fatty acid in natural rubber.

The blended fatty acid primarily functions as a crosslinking aid in the rubber composition.

Examples of the blended fatty acid include stearic acid, palmitic acid, and oleic acid, with stearic acid being particularly preferable.

The content of the blended fatty acid in the rubber composition is preferably 1.0 part by mass or less, more preferably 0.8 parts by mass or less per 100 parts by mass of the rubber component. The content of the blended fatty acid in the rubber composition may be 0 parts by mass, but is preferably 0.3 parts by mass or more, per 100 parts by mass of the rubber component.

### (Filler)

From the perspective of improving the mechanical strength of the crosslinked rubber, it is preferable that the rubber composition of the present disclosure contains a filler.

The filler is a reinforcing filler for reinforcing the rubber composition, and typically, at least one of carbon black and silica is used. The filler may contain metal oxides such as alumina, titania, and zirconia; metal carbonates such as magnesium carbonate and calcium carbonate; and aluminum hydroxide and the like.

Only one type of filler or a mixture of two or more types may be used.

The filler preferably includes at least carbon black.

### [Carbon Black]

The type of carbon black is not particularly limited, and examples thereof include carbon black such as GPF, FEF, HAF, ISAF, and SAF carbon black, for example, and commercially available products may be used. Only one type of carbon black or a mixture of two or more types may be used.

### [Silica]

The type of silica is not particularly limited, and examples thereof include wet silica, colloidal silica, calcium silicate, and aluminum silicate, for example.

Of these, the silica is preferably wet silica, and more preferably precipitated silica. The above-mentioned silica has high dispersibility in the rubber composition, can improve the low heat generating property of the crosslinked rubber, and further improve crack resistance.

Only one type of silica or two or more types may be used.

The content of the filler in the rubber composition is preferably 20 parts by mass or more, more preferably 30 parts by mass or more, even more preferably 40 parts by mass or more, and preferably 80 parts by mass or less, more preferably 70 parts by mass or less, and even more preferably 60 parts by mass or less, per 100 parts by mass of the rubber component.

### (Silane Coupling Agent)

When silica is used as the filler, a silane coupling agent may also be used in order to further enhance the reinforcing properties by strengthening the bond between silica and the rubber component while improving the dispersibility of silica in the rubber composition.

The content of the silane coupling agent in the rubber composition is preferably 5 to 15 parts by mass or less per 100 parts by mass of silica. When the content of the silane coupling agent is 15 parts by mass or less per 100 parts by mass of silica, the effect of improving the dispersibility of silica in the rubber composition can be obtained, and economic efficiency is less likely to be impaired. Furthermore, when the content of the silane coupling agent is 5 parts by mass or more per 100 parts by mass of silica, the dispersibility of silica in the rubber composition can be enhanced.

The silane coupling agent is not particularly limited. Examples include bis(3-triethoxysilylpropyl) disulfide, bis(3-triethoxysilylpropyl) trisulfide, bis(3-triethoxysilylpropyl) tetrasulfide, bis(3-trimethoxysilylpropyl) disulfide, bis(3-trimethoxysilylpropyl) trisulfide, bis(3-trimethoxysilylpropyl) tetrasulfide, bis(2-triethoxysilylethyl) disulfide, bis(2-triethoxysilylethyl) trisulfide, bis(2-triethoxysilylethyl) tetrasulfide, 3-trimethoxysilylpropylbenzothiazole disulfide, 3-trimethoxysilylpropylbenzothiazole trisulfide, and 3-trimethoxysilylpropylbenzothiazole tetrasulfide, for example.

### (Crosslinking Agent)

The rubber composition preferably further contains a crosslinking agent.

The content of the crosslinking agent in the rubber composition is not particularly limited, but is preferably 3.0 to 7.0 parts by mass per 100 parts by mass of the rubber component. By containing the crosslinking agent in the above range, it is possible to enhance the strength (such as crack resistance) of the crosslinked rubber without lowering the adhesion between the crosslinked rubber and the metal cord.

Examples of the crosslinking agent include organic peroxides, inorganic crosslinking agents, polyamine crosslinking agents, resin crosslinking agents, sulfur-based crosslinking agents (vulcanizing agents), and oxime-nitrosoamine-based crosslinking agents, for example.

Only one type of crosslinking agent or two or more types may be used.

Among the above, the crosslinking agent is preferably an organic peroxide or a sulfur-based crosslinking agent (vulcanizing agent), and more preferably a sulfur-based crosslinking agent (vulcanizing agent).

The organic peroxide is generally regarded as a derivative of hydrogen peroxide (H₂O₂), that is, a compound in which the hydrogen atoms of H-O-O-H are substituted with organic groups, and there is no particular limitation as long as it is a compound having different thermal decomposition characteristics depending on replacement with the organic groups, and examples include perbenzoic acid, benzoyl peroxide, cumene hydroperoxide, dicumyl peroxide, 1,1-bis(1,1-dimethylethylperoxy)cyclohexane, t-butyl peroxylaurate, and t-butyl peroxy-2-ethylhexanoate, for example.

Sulfur or a sulfur-containing compound is used as the sulfur-based crosslinking agent (vulcanizing agent), and typically sulfur is used.

### (Vulcanization Accelerator)

When the rubber composition contains a vulcanizing agent, it is preferable that the rubber composition further contains a vulcanization accelerator.

By containing a vulcanization accelerator in the rubber composition, the vulcanization of the rubber composition can be promoted, and the strength of the crosslinked rubber can be further increased.

The type of vulcanization accelerator is not particularly limited, and examples of vulcanization accelerators include guanidine-based, aldehyde-amine-based, aldehyde-ammonia-based, thiazole-based, sulfenamide-based, thiourea-based, dithiocarbamate-based, and xanthate-based vulcanization accelerators. Only one type or two or more types of these vulcanization accelerators may be used.

From the perspective of improving the durability of the crosslinked rubber, the content of the vulcanization accelerator in the rubber composition is preferably 0.1 parts by mass or more, more preferably 0.2 parts by mass or more, and preferably 2 parts by mass or less, more preferably 1.5 parts by mass or less, and even more preferably 1 part by mass or less, per 100 parts by mass of the rubber component.

### (Various Components)

The rubber composition may contain other components to the extent that the effects of the present disclosure are not impaired.

Examples of the other components include softeners, age resisters, zinc oxide, resins, waxes, and oils, which are additives commonly used in the rubber industry, for example, and these additives may be appropriately contained within a range not impairing the object of the present disclosure.

### [Age Resisters]

Among the other components, the age resisters are not particularly limited, and examples include amine-based, quinoline-based, quinone-based, phenol-based, and imidazole-based compound, as well as metal salts of carbamic acid, for example.

Examples of the amine-based age resister include phenylene diamine-based age resisters having a phenylenediamine skeleton (-NH-Ph-NH-), for example. Here, Ph represents a phenylene group.

Specific examples of the amine-based age resister include
N-(1,3-dimethylbutyl)-N'-phenyl-p-phenylenediamine,
N-isopropyl-N'-phenyl-p-phenylenediamine,
N,N'-diphenyl-p-phenylenediamine, N,N'-di-2-naphthyl-p-phenylenediamine,
N-cyclohexyl-N'-phenyl-p-phenylenediamine,
N,N'-bis(1-methylheptyl)-p-phenylenediamine,
N,N'-bis(1,4-dimethylpentyl)-p-phenylenediamine,
N,N'-dicyclohexyl-p-phenylenediamine,
N,N'-bis(1-ethyl-3-methylpentyl)-p-phenylenediamine,
N-4-methyl-2-pentyl-N'-phenyl-p-phenylenediamine,
N,N'-diaryl-p-phenylenediamine, hindered diaryl-p-phenylenediamine, phenylhexyl-p-phenylenediamine, and phenyloctyl-p-phenylenediamine.

Of these, the amine-based age resister preferably does not have a double bond other than the phenylenediamine skeleton (-NH-Ph-NH-), and specifically, an amine-based age resister represented by R¹-NH-Ph-NH-R² is preferable. Ph represents a phenylene group, and is preferably a 1,4-phenylene group.

R¹ and R² are each independently a monovalent saturated hydrocarbon group.

R¹ and R² can be the same or different, but from a synthetic point of view, they are preferably the same.

The number of carbon atoms of the monovalent saturated hydrocarbon group is preferably 1 to 20, more preferably 3 to 10, and particularly preferably 6 and 7. When the number of carbons of saturated hydrocarbon groups is 20 or less, the moles per unit mass are increased, which enhances the age resisting effect and improves the ozone resistance of the crosslinked rubber of the rubber composition.

From the viewpoint of further improving the ozone resistance of the crosslinked rubber of the rubber composition, R¹ and R² are each independently preferably a chain or cyclic monovalent saturated hydrocarbon group having 1 to 20 carbon atoms.

Examples of the monovalent saturated hydrocarbon group include alkyl groups and cycloalkyl groups. The alkyl groups may be linear or branched, and the cycloalkyl groups may further have alkyl groups, etc. attached as substituents.

As the alkyl group, a 1,4-dimethylpentyl group is preferable.

As the cycloalkyl group, a cyclohexyl group is preferable.

In addition, quinoline-based age resisters can also be preferably used, and examples of quinoline-based age resisters include 2,2,4-trimethyl-1,2-dihydroquinoline polymer and 6-ethoxy-2,2,4-trimethyl-1,2-dihydroquinoline, for example.

Only one type or two or more types of the above-described age resisters may be used.

The content of the age resister in the rubber composition is not particularly limited, but from the perspective of improving the durability of the crosslinked rubber, the content is preferably 0.5 parts by mass or more, more preferably 1 part by mass or more, and preferably 4 parts by mass or less, more preferably 3 parts by mass or less, per 100 parts by mass of the rubber component.

### [Zinc Oxide]

Among the other components, zinc oxide (ZnO) is used as a vulcanization accelerator aid.

By further containing zinc oxide in the rubber composition, vulcanization of the rubber composition can be promoted, and the strength of the crosslinked rubber can be further increased.

Here, the content of zinc oxide in the rubber composition is not particularly limited, but from the perspective of improving the durability of the crosslinked rubber, the content is preferably 4 parts by mass or more, more preferably 6 parts by mass or more, and preferably 15 parts by mass or less, more preferably 13 parts by mass or less, per 100 parts by mass of the rubber component.

### (Preparation of Rubber Composition)

The method for preparing the rubber composition is not particularly limited.

The rubber composition of the present disclosure can be produced, for example, by compounding the above-described components and kneading them using a kneader such as a Banbury mixer, roll, or internal mixer.

Here, the compounding amounts of each component are the same as the contents described above in the rubber composition.

The kneading of the components can be performed in one stage or divided into two or more stages. For example, in the case of two-stage kneading, the maximum temperature in the first stage of kneading is preferably 130 to 160°C, and the maximum temperature in the second stage is preferably 90 to 120°C.

### [Metal Cord]

With regard to the metal cord included in the metal cord-crosslinked rubber composite of the present disclosure, the surface of the metal cord has an N atom ratio of 2 atomic% or more and 60 atomic% or less and a Cu/Zn ratio of 1 or more and 4 or less.

The metal cord used in the metal cord-crosslinked rubber composite of the present disclosure typically consists of a single metal wire (metal steel wire) or is formed by twisting a plurality of metal wires together.

The metal wire used is not particularly limited, and examples include wires of iron, steel (stainless steel), lead, aluminum, copper, brass, bronze, Monel metal alloy, nickel, and zinc, for example.

The metal wire preferably has a plating layer applied to the surface (circumferential surface) thereof by a conventional method. The plating layer is not particularly limited, and examples include a zinc plating layer, a copper plating layer, and a brass plating layer, for example. Of these, from the perspective of initial adhesiveness and hygrothermal adhesiveness with the rubber composition, and formation of a suitable rubber-metal adhesion layer, a brass plating layer is preferable. In other words, the above-described metal wire is preferably a metal wire having brass plating applied on the circumferential surface thereof.

When the metal cord is a metal cord comprising a single metal wire or a plurality of wires twisted together having brass plating applied on the circumferential surface thereof, the composition of the brass plating (bulk brass plating constituting the brass plating layer) preferably comprises 40 to 80 mass% of Cu (copper) and 20 to 60 mass% of Zn (zinc), from the perspective of sthe processability of the teel cord and adhesion with rubber. From a similar perspective, the composition of the brass plating more preferably comprises 55 to 70 mass% of Cu and 30 to 45 mass% of Zn.

As the metal wire, a steel wire is exemplified, and further details are described. A steel wire is a wire-like metal material having steel or iron as a primary component (mass of iron is to exceed 50 mass % with respect to the total mass of the metal steel wire). The metal steel wire may contain other metals than iron described above.

The wire diameter of the steel wire is preferably in the range of 0.1 mm to 5.5 mm, and more preferably in the range of 0.15 mm to 5.26 mm in terms of achieving good workability and durability of the wire. The "wire diameter" of a steel wire represents the maximum length measured between two points on the outer periphery of a cross section of the steel wire, where the cross section is orthogonal to the longitudinal axis of the wire. Configuration of the cross section orthogonal to the longitudinal axis of the steel wire is not particularly restricted and may be oval, rectangular, triangular or polygonal, although the configuration is generally circular. In a case where steel cords, which is metal-made reinforcing cords, each formed by twisting the steel wires together are used for a carcass and/or a belt of a tire, it is preferable that the cross sectional shape of the metal steel wire is circular and the wire diameter thereof is in the range of 0.1 mm to 0.5 mm. In a case where steel cords, each formed by twisting the metal steel wires together, are used for a bead core of a tire, it is preferable that the cross sectional shape of the metal steel wire is circular and the wire diameter thereof is in the range of 1 mm to 1.5 mm. Furthermore, it is preferable that the steel wire has a brass plating layer having the above-described composition on the surface thereof, and although the thickness of this plating layer is not particularly limited, the thickness is generally 100 to 300 nm, for example.

In the present disclosure, for example, a metal cord made of steel cords can be obtained by a conventional method by twisting a plurality of metal wires such as steel wires having brass plating applied on the circumferential surface thereof to form a 1×N structure, a 1+N structure, or an M+N structure, for example, . Furthermore, a multi-twist metal cord in which Q core strands and P sheath strands are twisted together can be obtained by further twisting a plurality of the above-twisted steel cords.

The metal cord suitable for reinforcing rubber articles, such as this steel cord, is preferably used as at least one selected from the group consisting of a belt cord, a carcass cord, and a bead cord for tires.

In the present disclosure, from the perspective of treat shelf property, the above-described metal cord is required to have a nitrogen (N) atom ratio on the surface of 2 atomic% or more and 60 atomic% or less, and a Cu/Zn ratio on the surface of 1 or more and 4 or less, based on mass.

By setting the nitrogen atom ratio on the surface of the metal cord to 2 atomic% or more, the effects of the present disclosure can be sufficiently obtained. If the nitrogen atom ratio on the surface is less than 2 atomic%, the treat shelf property is reduced, and if the nitrogen atom ratio is more than 60 atomic%, the initial adhesiveness with rubber is reduced. Furthermore, by setting the Cu/Zn ratio on the surface of the metal cord to 1 or more, the effects of the present disclosure can be sufficiently obtained. If the Cu/Zn ratio on the surface is less than 1, the initial adhesiveness becomes insufficient, and if the Cu/Zn ratio is 4 or less, the initial adhesiveness is favorable, whereas if the Cu/Zn ratio is more than 4, the hygrothermal aging resistance becomes insufficient. From a similar perspective, the nitrogen atom ratio on the surface of the metal cord is preferably 2.1 atomic% or more and preferably 55.0 atomic% or less. Furthermore, from a similar perspective, the Cu/Zn ratio on the surface of the metal cord is preferably 1.1 or more and preferably 3.5 or less.

In the present disclosure, the nitrogen (N) atom ratio on the surface of the above-described metal cord can be adjusted within the certain range, particularly 2 atomic% or more and 60 atomic% or less by suitably combining surface treatments, such as a treatment with a triazole compound (rust inhibitor), specifically, contacting with an aqueous solution of a triazole compound (triazole aqueous solution), for example. Furthermore, the Cu/Zn ratio on the surface of the metal cord can be adjusted within the certain range, particularly 1 or more and 4 or less, by combining a surface treatment with an acidic buffer solution and a treatment with a triazole compound, and by adjusting the pH of the acidic buffer solution or adjusting the concentration of the aqueous solution of the triazole compound, etc. In this regard, the Cu/Zn ratio on the surface of the metal cord is increased as the pH of the acidic buffer solution is reduced.

The pH of the acidic buffer solution is preferably 5.0 to 7.2. If the pH is less than 5.0, it may be impossible or difficult to set the Cu/Zn ratio to 4 or less, and if the pH is higher than 7.2, it may be impossible or difficult to set the Cu/Zn ratio to 1 or more. Examples of the acidic buffer solution include acetic acid buffer solution, phosphoric acid buffer solution, and citric acid buffer solution, for example, and among these, the acetic acid buffer solution is preferable. When an acetic acid buffer solution with pH 5.0 to 7.2 is used, the surface treatment time with the acidic buffer solution can be 0.5 to 20 seconds.

As the triazole compound, for example, one or more triazole compounds selected from 1,2,4-triazole, 1,2,3-triazole, 3-amino-1,2,4-triazole, 4-amino-1,2,4-triazole, benzotriazole, tolyltriazole, and 3-mercapto-1,2,4-triazole may be mentioned, and preferably, it is more preferable to use one or more triazole compounds selected from 1,2,4-triazole, 1,2,3-triazole, 3-amino-1,2,4-triazole, and 4-amino-1,2,4-triazole. Furthermore, the concentration of the triazole aqueous solution is preferably 0.01 to 20 g/L. Although the treatment time with the triazole compound varies depending on the concentration, the treatment time can be 0.1 to 30 seconds.

In the present disclosure, the "surface" refers to the surface layer region of a metal wire, such as a steel wire, up to a depth of 5 (nm) inward in the radial direction. The N atom ratio on the surface of the above-described metal cord, and the measurement of the Cu/Zn ratio is a measurement on the surface of the metal cord before being coated with the rubber composition, after performing washing treatment, drying, etc., as necessary, after the production of the metal cord.

Furthermore, in the present disclosure (including examples described later), the measurement of the N atom ratio on the surface of the above-described metal cord is a measurement of the N atom ratio on the surface of the metal cord by X-ray photoelectron spectroscopy (XPS), and the measurement of the Cu/Zn ratio on the surface of the metal cord is a measurement of the Cu/Zn ratio on the surface of the metal cord by the above-described photoelectron spectroscopy.

### [Production of Metal Cord-Crosslinked Rubber Composite]

The metal cord-crosslinked rubber composite of the present disclosure can be obtained by coating the above-described rubber composition on the metal cord. The method of coating the metal cord with the rubber composition is not particularly limited. For example, the metal cord-crosslinked rubber composite can be produced by performing washing treatment on the metal cord, particularly the metal cord subjected to the above-described surface treatments by a conventional method as necessary, and then performing a step of bonding the metal cord with the rubber composition of the present disclosure. The bonding of the metal cord and the rubber composition can be carried out, for example, by crosslinking adhesion of the metal cord and the rubber composition under pressure and heat.

Specifically, for example, a given number of metal cords are arranged in parallel at given intervals, and these metal cords are coated from both the top and bottom with unvulcanized rubber sheets having a thickness of about 0.5 mm made of the rubber composition of the present disclosure to obtain a precursor (metal cord-unvulcanized rubber composite). Next, a metal cord-crosslinked rubber composite can be obtained by crosslinking the resulting precursor. During the above-described crosslinking, a vulcanizing agent can be used as the crosslinking agent, for example. Furthermore, as for the crosslinking conditions, the crosslinking pressure is preferably 2 MPa to 15 MPa, and more preferably 2 MPa to 5 MPa. The crosslinking temperature is preferably 120 to 200°C, and more preferably 130 to 170°C. Furthermore, the vulcanization time is not limited, but is preferably in the range of 3 minutes to 60 hours.

The metal cord-crosslinked rubber composite obtained in this manner has excellent crosslinked rubber-metal adhesion (initial adhesiveness and heat-resistant adhesiveness).

The metal cord-crosslinked rubber composite of the present disclosure is excellent in initial adhesiveness and heat-resistant adhesiveness, as described above, and is suitably used as a reinforcing material for rubber articles that require strength, such as various automobile tires, crawlers, and hoses. In particular, the metal cord-crosslinked rubber composite is suitably used as a reinforcing member, such as belts, carcass plies, and wire chafers of various automobile radial tires.

### <Tire>

A tire of the present disclosure includes the metal cord-crosslinked rubber composite of the present disclosure. Since the tire of the present disclosure includes the metal cord-crosslinked rubber composite of the present disclosure, it has excellent durability.

The method for producing the tire of the present disclosure is not particularly limited as long as it is a method capable of producing such that the metal cord-crosslinked rubber composite of the present disclosure is included in the tire. In general, a rubber composition containing various components is processed into members without being crosslinked, which are attached and shaped by conventional methods in a tire forming machine, to form a green tire. The green tire is then heated and pressurized in a crosslinking machine to produce a tire. For example, a tire can be obtained by kneading the rubber composition of the present disclosure and then coating a metal cord with the obtained rubber composition to laminate an uncrosslinked belt layer, an uncrosslinked carcass, and other uncrosslinked members, and crosslinking the uncrosslinked laminate.

As a gas with which the tire is filled, an inert gas such as nitrogen, argon, or helium can be used, as well as normal air or air whose oxygen partial pressure has been adjusted.

The various components (resin, rubber, various additives, etc.) contained in the rubber composition and tire described in this specification may be partially or entirely derived from fossil resources, or may be derived from biological resources such as plant resources, or may be derived from recycled resources such as used tires. Alternatively, these various components may be derived from a mixture of two or more of fossil resources, biological resources, and recycled resources.

### [Contribution to Sustainable Development Goals (SDGs) led by the United Nations]

The SDGs have been proposed towards the realization of a sustainable society. One embodiment of the present disclosure can be considered to be a technology that contributes to "No.7 Affordable and Clean Energy," "No.12 Responsible Consumption and Production," and "No. 13 Climate Action."

### EXAMPLES

### <Examples 1 to 5 and Comparative Examples 1 to 5>

### [Preparation of Rubber Composition]

The components were kneaded according to the formulation listed in Table 1 to prepare rubber compositions. The details of the components listed in Table 1 are as follows.
Natural rubber 1: Natural rubber (RSS #3) having a fatty acid content of 1.63 mass%
Natural rubber 2: Natural rubber (RSS #3) having a fatty acid content of 1.16 mass%
Synthetic isoprene rubber: trade name "IR2200" manufactured by JSR Corporation
Carbon black: HAF-grade carbon black

### Fatty acid (blended fatty acid): Stearic acid

Zinc oxide: trade name "Zinc Oxide No. 3" manufactured by Hakusui Tech Co., Ltd.
Age resister: N-phenyl-N'-(1,3-dimethylbutyl)-p-phenylenediamine, trade name "NOCRAC 6C" manufactured by Ouchi Shinko Chemical Industrial Co., Ltd.
Vulcanization accelerator: N,N'-dicyclohexyl-2-benzothiazyl sulfenamide, trade name "NOCCELER DZ" manufactured by Ouchi Shinko Chemical Industrial Co., Ltd.
Crosslinking agent: Vulcanizing agent (sulfur), trade name "Powder Sulfur" manufactured by Tsurumi Chemical Co., Ltd.

**[Table 1]**

| | | Rubber composition | |
|---|---|---|---|
| | | A | B |
| Natural rubber 1 | pt. by mass | 80 | 0 |
| Natural rubber 2 | pt. by mass | 0 | 80 |
| Synthetic isoprene rubber | pt. by mass | 20 | 20 |
| Carbon black (HAF) | pt. by mass | 54 | 54 |
| Fatty acid | pt. by mass | 0.6 | 0.6 |
| Zinc white | pt. by mass | 9 | 9 |
| Age resister | pt. by mass | 1.2 | 1.2 |
| Vulcanization accelerator | pt. by mass | 0.4 | 0.4 |
| Crosslinking Agent | pt. by mass | 5 | 5 |

### [Production of Metal Cords]

Five types of metal cords C1 to C5 were produced as follows.

A steel cord having a 1×3 structure was produced by twisting steel wires subjected to brass plating with a bulk plating composition (Cu/Zn in mass ratio) of 63/37 (with a thickness of the plating layer of 0.2 µm, wire diameter of 0.3 mm).

Next, this steel cord was washed by the following treatment method using treatment solutions, namely, a treatment 1 with an acetic acid buffer solution and a treatment 2 with a rust inhibitor (triazole compound), and then dried at 50°C for 1 minute to obtain a metal cord.

### (Treatment 1: Treatment with Acetic Acid Buffer Solution)

As the treatment with the acetic acid buffer solution, a surface treatment was performed by washing the produced steel cord for a treatment time of 10 seconds using a treatment solution (acetic acid buffer solution) prepared by adjusting 0.1-N sodium acetate with acetic acid so that pH was 6.4.

### (Treatment 2: Treatment with Triazole Compound (Rust Inhibitor))

As the treatment with the triazole compound (rust inhibitor), a surface treatment was performed by washing the produced steel cord for a treatment time of 10 seconds using an aqueous solution of a triazole compound that was adjusted to the concentration listed in Table 2 using 1,2,4-triazole.

After these washing treatments was completed, the N atom ratio (N atom amount on the outermost surface in atomic percentage) and the Cu/Zn ratio (Cu/Zn ratio on the outermost surface) on the plating surface of the wire of the steel cord were measured using an X-ray photoelectron spectroscopy apparatus (Quantera manufactured by ULVAC-PHI, Inc.), and the results are listed in Table 2 below.

The measurement conditions for X-ray photoelectron spectroscopy are as follows.
X-ray source: Monochromatized Al-Kα line
Measurement ergion: 50 µmΦ
Measurement peaks: C1s, O1s, N1s, P2p, Cu2p3/2, and Zn2p3/2
Data processing: Multipak (developed by ULVAC-PHI, Inc.)
Quantification: Quantification was performed by the relative sensitivity factor method based on the obtained peak area
* Cu/Zn was the ratio of the quantitative values of Cu2p3/2 and Zn2p3/2.

**[Table 2]**

| | | Metal cords | | | | |
|---|---|---|---|---|---|---|
| | | C1 | C2 | C3 | C4 | C5 |
| Concentration of rust inhibitor | g/L | 106 | 99 | 51 | 20 | 0 |
| N atom ratio on the surface | atomic % | 32 | 29 | 22 | 13 | 10 |
| Cu/Zn ratio on the surface | - | 63/37 | 63/37 | 63/37 | 63/37 | 63/37 |

### [Production of Metal Cord-Unvulcanized Rubber Composite (Precursor)]

The steel cords after the completion of the above-described washing treatments were arranged in parallel at intervals of 12.5 mm, and the steel cords were coated from both the top and bottom with the rubber composition to obtain a metal cord-unvulcanized rubber composite (precursor) in which the steel cords were embedded in an unvulcanized rubber sheet with a thickness of a 1 mm (the steel cords were arranged at 12.5 mm intervals on the sheet surface at the center in the thickness direction of the unvulcanized rubber sheet).

As listed in Tables 3 to 7, Rubber composition A was used in Comparative Examples 1 to 5, Rubber composition B was used in Examples 1 to 5, and the metal cords listed in Tables 3 to 7 were used.

### <Evaluations>

### 1. Acid Contents

### (1) Fatty Acid Content in Natural Rubber

The catalog values of the products were used as the fatty acid contents (mass%) in Natural Rubber 1 and Natural Rubber 2. They are listed as "Acid amount in NR [%]" in Tables 3 to 7.

### (2) Content of Blended Fatty Acid

The amount (parts by mass) of the blended fatty acid per 100 parts by mass of the rubber component used in the preparation of the rubber composition is listed as "Blended acid content [phr]" in Tables 3 to 7.

### (3) Fatty Acid Content in Vulcanized Rubber

The fatty acid contents (mass%) in the vulcanized rubber were calculated from (1) the fatty acid content in natural rubber and (2) the content of the blended fatty acid, and are listed as "Acid content in vulcanized rubber [%]" in Tables 3 to 7. Note that the mass of the vulcanized rubber obtained by vulcanizing a rubber composition with a mass "a" can be regarded to be equal to the mass "a", and the fatty acid content in the rubber composition can be regarded as the fatty acid content in the vulcanized rubber.

### 2. Evaluation of Adhesiveness

### (1) Initial Adhesiveness

The produced metal cord-unvulcanized rubber composite (precursor) was vulcanized at 145°C for 20 minutes, and the steel cords were pulled out from the metal cord-vulcanized rubber composite.

The coating state of the vulcanized rubber adhering to the steel cords was visually observed. In each example, the amount of vulcanized rubber was expressed as an index, with the amount adhered to the steel cords in Comparative Example 1 taken as 100 in Table 3, Comparative Example 2 in Table 4, Comparative Example 3 in Table 5, Comparative Example 4 in Table 6, and Comparative Example 5 in Table 7. Tables 3 to 7 list the results. The allowable range is 105 or higher.

### (2) Heat-Resistant Adhesiveness

the heat-resistant adhesion performance if the metal cord-crosslinked rubber composite is allowed to stand under a nitrogen atmosphere at 100 °C or higher for 30 days to cause to the composite to degrade and an evaluation is made according to ASTM D 2229 was estimated based on the initial adhesion performance of each metal cord-crosslinked rubber composite, and was scored in a range from 0 to 100%. The results were indicated as indices in Tables 3 to 7, taking each Comparative Example as 100. The larger index value represents better heat-resistant adhesiveness.

**[Table 3]**

| | | Comparative Example 1 | Example 1 |
|---|---|---|---|
| Rubber composition | Type | A | B |
| Metal cords | Type | C1 | C1 |
| Acid contents | Acid content in NR [%] | 1.63 | 1.16 |
| | Blended acid content [phr] | 0.6 | 0.6 |
| | Acid content in vulcanized rubber [%] | 1.10 | 0.88 |
| Evaluations | Initial adhesiveness | 100 | 122 |
| | Heat-resistant adhesiveness | 100 | 128 |

**[Table 4]**

| | | Comparative Example 2 | Example 2 |
|---|---|---|---|
| Rubber composition | Type | A | B |
| Metal cords | Type | C2 | C2 |
| Acid contents | Acid content in NR [%] | 1.63 | 1.16 |
| | Blended acid content [phr] | 0.6 | 0.6 |
| | Acid content in vulcanized rubber [%] | 1.10 | 0.88 |
| Evaluations | Initial adhesiveness | 100 | 126 |
| | Heat-resistant adhesiveness | 100 | 128 |

**[Table 5]**

| | | Comparative Example 3 | Example 3 |
|---|---|---|---|
| Rubber composition | Type | A | B |
| Metal cords | Type | C3 | C3 |
| Acid contents | Acid content in NR [%] | 1.63 | 1.16 |
| | Blended acid content [phr] | 0.6 | 0.6 |
| | Acid content in vulcanized rubber [%] | 1.10 | 0.88 |
| Evaluations | Initial adhesiveness | 100 | 127 |
| | Heat-resistant adhesiveness | 100 | 128 |

**[Table 6]**

| | | Comparative Example 4 | Example 4 |
|---|---|---|---|
| Rubber composition | Type | A | B |
| Metal cords | Type | C4 | C4 |
| Acid contents | Acid content in NR [%] | 1.63 | 1.16 |
| | Blended acid content [phr] | 0.6 | 0.6 |
| | Acid content in vulcanized rubber [%] | 1.10 | 0.88 |
| Evaluations | Initial adhesiveness | 100 | 112 |
| | Heat-resistant adhesiveness | 100 | 128 |

**[Table 7]**

| | | Comparative Example 5 | Example 5 |
|---|---|---|---|
| Rubber composition | Type | A | B |
| Metal cords | Type | C5 | C5 |
| Acid contents | Acid content in NR [%] | 1.63 | 1.16 |
| | Blended acid content [phr] | 0.6 | 0.6 |
| | Acid content in vulcanized rubber [%] | 1.10 | 0.88 |
| Evaluations | Initial adhesiveness | 100 | 106 |
| | Heat-resistant adhesiveness | 100 | 128 |

It can be understood from Tables 3 to 7 that the initial adhesiveness and heat-resistant adhesiveness in Examples 1 to 5 which used a prescribed metal cords, and used, as the coating rubber for the metal cords, the vulcanized rubber of the rubber composition of the present disclosure containing natural rubber having a fatty acid content of 1.60 mass% or less as a rubber component were superior to those of the metal cord-vulcanized rubber composites of Comparative Examples 1 to 5.

### INDUSTRIAL APPLICABILITY

According to the present disclosure, it is possible to provide a metal cord-crosslinked rubber composite with excellent initial adhesiveness and heat-resistant adhesiveness. This metal cord-crosslinked rubber composite is suitably used as a reinforcing material for rubber articles that require strength, such as various automobile tires, crawlers, and hoses. Particularly, the metal cord-crosslinked rubber composite can be suitably used as a reinforcing member, such as belts, carcass plies, and wire chafers of various automobile radial tires.

## Claims

1. A metal cord-crosslinked rubber composite comprising a metal cord and a crosslinked rubber that coats the metal cord,
wherein a surface of the metal cord has an N atom ratio of 2 atomic% or more and 60 atomic% or less and a Cu/Zn ratio of 1 or more and 4 or less,
the crosslinked rubber is a crosslinked rubber of a rubber composition containing a rubber component including natural rubber,
a fatty acid content in the natural rubber is 1.60 mass% or less, and
a content of a cobalt-containing compound in the rubber composition is 1 part by mass or less per 100 parts by mass of the rubber component.

2. The metal cord-crosslinked rubber composite according to claim 1, wherein the metal cord is a metal cord comprising a single metal wire or a plurality of wires twisted together having brass plating applied to a circumferential surface thereof, and a composition of the brass plating comprises 40 to 80 mass% of Cu and 20 to 60 mass% of Zn.

3. The metal cord-crosslinked rubber composite according to claim 1 or 2, wherein the metal cord is a metal cord subjected to a surface treatment with a buffer solution having a pH of 5.0 to 7.2 and a treatment with one or more triazole compounds selected from 1,2,4-triazole, 1,2,3-triazole, 3-amino-1,2,4-triazole, 4-amino-1,2,4-triazole, benzotriazole, tolyltriazole, and 3-mercapto-1,2,4-triazole.

4. The metal cord-crosslinked rubber composite according to any one of claims 1 to 3, wherein a content of cobalt fatty acid salts as the cobalt-containing compound in the rubber composition is 0 part by mass per 100 parts by mass of the rubber component.

5. The metal cord-crosslinked rubber composite according to claim 4, wherein the content of the cobalt-containing compound in the rubber composition is 0 part by mass per 100 parts by mass of the rubber component.

6. The metal cord-crosslinked rubber composite according to any one of claims 1 to 5, wherein a proportion of the natural rubber in the rubber component is 60 mass% or more.

7. A tire comprising the metal cord-crosslinked rubber composite according to any one of claims 1 to 6.
